# EUROPÄISCHE PATENTSCHRIFT

(11) **EP 0 885 044 B1**
(45) Veröffentlichungstag und Bekanntmachung des Hinweises auf die Patenterteilung: **20.11.2002**
(21) Anmeldenummer: 97902342.1
(22) Anmeldetag: 06.02.1997
(51) Int. Cl.: B01D 29/23, B01D 46/24

(54) **KONISCHER FLUIDFILTER**
CONICAL FLUID FILTER
FILTRE CONIQUE POUR FLUIDES

(30) Priorität: 06.03.1996 DE 19608589
(43) Veröffentlichungstag der Anmeldung: 23.12.1998
(73) Patentinhaber: FILTERWERK MANN & HUMMEL GmbH, 71631 Ludwigsburg (DE)
(72) Erfinder: KELLER, Lothar, D-70176 Stuttgart (DE); LUKA, Helmut, D-70806 Kornwestheim (DE); POLDNER, Erich, D-71711 Steinheim (DE); RAPP, Siegfried, D-71711 Murr (DE); SOMMER, Bruno, D-71636 Ludwigsburg (DE)
(74) Vertreter: Voth, Gerhard, Dipl.-Ing.
(86) Internationale Anmeldenummer: EP9700535
(87) Internationale Veröffentlichungsnummer: WO97032651

(56) Entgegenhaltungen:
- WO-A-89/01818
- WO-A-91/19898
- WO-A-94/13389
- DE-U- 9 305 442
- NL-A- 9 002 451
- US-A- 4 243 397

## Beschreibung

Die Erfindung betrifft ein Filter für gasförmige und flüssige Medien, insbesondere zur Filtration von Kühl-, Schmier- und Bearbeitungsmedien bei Werkzeugmaschinen.

Solche Filter bestehen üblicherweise aus einem zick-zack-förmig gefalteten Filtermedium, beispielsweise aus Filterpapier, welches Endscheiben und Stützgitter aufweist. So ist z. B. eine Filterpatrone für die Reinigung des bei Erodiermaschinen eingesetzten Dielektrikums bekannt. Diese Filterpatrone weist Kunststoffendscheiben mit entsprechenden Dichtungen sowie ein Stützrohr und das Filtermedium auf.

Ein Nachteil solcher Filter ist die Materialvielfalt und damit der relativ hohe Aufwand beim Entsorgen dieser Filterelemente. So besteht das Filter in vielen Fällen aus einem Papierfiltereinsatz, der mit Kunststoffendscheiben versehen ist. An diesen Kunststoffendscheiben sind Gummidichtungen angeordnet. Die Abstützung des gesamten Elements erfolgt über ein Stützrohr, welches als innen oder außen liegendes Rohr mit den Endscheiben verbunden ist.

Zusätzlich zu den konstruktiv erforderlichen Materialien weist das zu recycelnde Element noch das aus der Flüssigkeit ausgefilterte Material, beispielsweise Schleifspäne, Korund und anderes auf. Die Entsorgung solcher Elemente ist daher nicht unproblematisch.

Aus der NL-A-9002451 ist ein Filterelement bekannt, welches Endscheiben aufweist. Diese Endscheiben sind mit Öffnungen versehen, wobei eine Verleimung oder eine Verklebung des Filterelements in vorgesehenen Taschen der Endscheiben erfolgt.

Es ist weiterhin aus der WO-A-94/13389 ein Luftfilter, insbesondere für die Reinigung von Verbrennungsluft für Brennkraftmaschinen beschrieben. Dort besteht die Endscheibe des Filterelements aus Polyeurethan-Schaum, der sowohl mit dem Filterelement verbunden ist, als auch die Dichtwirkung erzeugt. Der Polyeurethan-Schaum muss in diesem Fall zwei Funktionen, nämlich die Abdichtung und die Verbindung mit dem Filterelement vornehmen.

Der Erfindung liegt die Aufgabe zugrunde, ein Filter zu schaffen, welches kostengünstig herstellbar ist, aus recycelfähigen oder wiederverwendbaren Werkstoffen besteht und eine hohe Aufnahmekapazität besitzt.

Diese Aufgabe wird ausgehend von dem Gattungsbegriff des Hauptanspruchs durch dessen Merkmale gelöst.

Der wesentliche Vorteil des Filters besteht darin, daß dieses nach Art eines Auffangbehälters aufgebaut ist. Dies bedeutet eine Erhöhung der Aufnahmekapazität gegenüber herkömmlichen Filtern, die von außen nach innen durchströmt werden. Die Durchströmung von innen nach außen hat ferner den Vorteil, daß bei einem Austausch des Filterelements die äusgefilterten Partikel nicht in den Reinflüssigkeitsraum bzw. andere Umgebung gelangen können, sondern sicher und zuverlässig mit dem Filterelement entfernt werden. Die konische Ausgestaltung des Filterelements hat ferner den Vorteil, daß die Beschädigungsgefahr bei der Montage und Demontage minimiert und dieses wesentlich leichter entfernt werden kann.

Gemäß einer vorteilhaften Ausgestaltung ist die geschlossene Dichtscheibe nach innen, d. h. zur Druckseite hin gewölbt. Damit wird der Flüssigkeitsdruck, der auf der Anströmseite, d. h. der Schmutzflüssigkeitsseite, größer ist als auf der Reinflüssigkeitsseite, aufgefangen.

Eine weitere Ausgestaltung sieht vor, das Filtermittel in die stimseitigen Dichtscheiben einzubetten bzw. mit diesen zu verbinden.

Bei der Verwendung von PUR, also Polyurethan als Material für die Dichtscheiben wird das Filtermittel vor der Vernetzung des Kunststoffes in diese Masse eingebettet.

Nach einer weiteren Ausgestaltung ist das Radialdichtungselement im Zweikomponentenverfahren mit der Dichtscheibe verbunden. Dies bedeutet, daß in einem ersten Arbeitsschritt zunächst die erste Komponente, d.h. beispielsweise ein Weich-PUR-Kunststoff in eine Form gegossen wird und im nächsten Arbeitsgang diese Form mit einem Hart-PUR-Kunststoff aufgefüllt wird. Anschließend erfolgt die Einbringung des Filtermittels. Dieser Aufbau zeichnet sich dadurch aus, daß das Filter lediglich aus zwei Werkstoffen besteht und eine thermische Entsorgung problemlos möglich ist.

Gemäß einer weiteren Ausgestaltung ist das Filter in einem Gehäuse angeordnet, welches einen entsprechend der Außenkontur des Filterelements geformten Lochblechmantel aufweist. Zwischen dem Lochblechmantel und dem zick-zack-förmig gefalteten Filtermittel ist fertigungsbedingt ein geringer Zwischenraum möglich, der sich jedoch bei höheren eingangsseitigen Drücken des zu filternden Mediums verringert, wobei dann eine Abstützung des Filtermittels an dem Lochblechmantel erfolgt.

Der Rohflüssigkeitsbereich ist mit einem Deckel verschlossen. Dieser Deckel weist einen Sicherheitsverschluß auf, welcher gewährleistet, daß beim Öffnen des Deckels zunächst ein Druckabbau erfolgt und erst in einem weiteren Arbeitsgang der Deckel von dem Behälter entfernt werden kann.

In vorteilhafter Weise läßt sich die Filterkapazität durch Aufbau eines Filterarrays an die gestellten Anforderungen anpassen. Hierzu wird ein Behälter mit mehreren Filterelementen bestückt.

Dieser platzsparende Einbau beinhaltet einen Bauraumgewinn, außerdem ist die Einrichtung gut an Anlagen adaptierbar, indem mit einfachen Hilfsmitteln bisherige Filterausführungen substituiert werden können.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Die Erfindung wird nachfolgend anhand von Ausführungsbeispielen näher erläutert. Es zeigt
- Figur 1: ein Filter in Schnittdarstellung
- Figur 2: ein Filtergehäuse
- Figur 3: eine Draufsicht auf das Filtergehäuse
- Figur 4: ein Filtersystem.

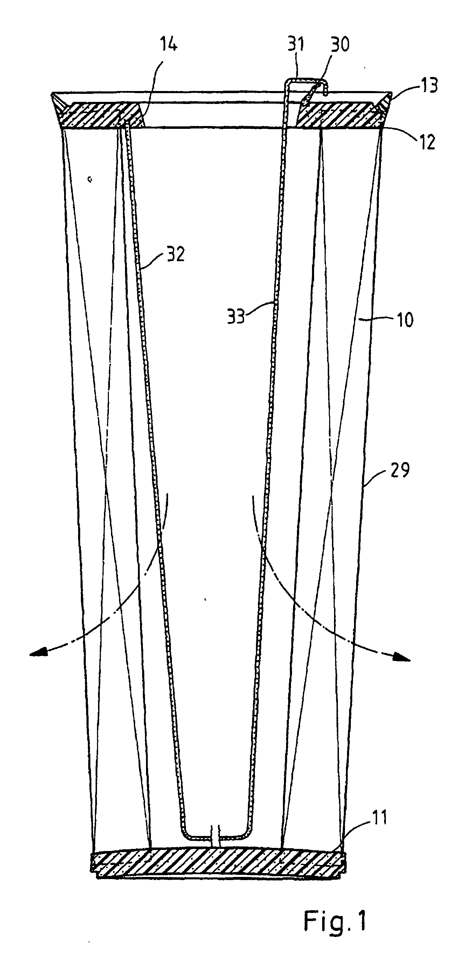

Das Filter gemäß Figur 1 besteht aus einem zick-zack-förmig gefalteten Filterelement 10, einer ersten Dichtscheibe 11, welche als geschlossener Boden ausgestaltet ist und mit einer nach oben gerichteten Wölbung versehen ist, sowie einer zweiten Dichtscheibe 12, welche einen Rohflüssigkeitszulauf aufweist. Die Dichtscheibe 12 ist mit einer umlaufenden Dichtlippe 13 versehen. Diese Dichtlippe besteht aus weichem PUR-Schaum, während die Dichtscheibe 12 aus hartem PUR-Schaum besteht. Die Dichtscheibe 12 weist einen nach innen eingezogenen Rand 14 auf. Dieser Rand dient als Griffinulde oder Griffelement für das Herausnehmen des Filters aus einem nachfolgend beschriebenen Behälter. Das Filterelement 10 ist auf beiden Seiten in den Dichtscheiben 11, 12 eingebettet. Dadurch wird eine optimale Verbindung und Dichtheit zwischen Dichtscheibe und Filterelement erzielt.

Des weiteren ist ein Vorfilter 31 alternativ möglich, das als zylindrisches, konisches Element ausgeibldet ist, wobei das Vorfilterelement glatt oder, wenn eine große Filterfläche benötigt wird, zick-zack-förmig ausgeführt werden kann. Der Werkstoff ist von den zu filternden Medien abhängig.

Das Vorfilter 31 ist so konzipiert, daß es separat herausgenommen, gereinigt und wieder montiert werden kann. Die Axialdichtung 30 kann wahlweise auf der Dichtscheibe 12 aufgebracht werden. Mit ihr wird das Vorfilter gegenüber dem Hauptfilter abgedichtet.

Als weitere Ausgestaltung ist ein mit der Dichtscheibe 12 fest verbundenes Vorfilter als Siebtasche 32 ausgebildet. Dieses Filterelement wird ausschließlich aus Kunststoff gestaltet.

Beide Vorfilter haben die Aufgabe, die Standzeit zu verlängern bzw. die Schmutzkapazität zu erhöhen. In welchem Falle ein Vorfilter eingesetzt wird, ist vom Schmutzanfall und der Schmutzzusammensetzung abhängig.

Außerdem kann mit dem auswechselbaren und reinigbaren Vorfilter 31 das ausgefilterte Material reduziert werden, das am Filterelement 10 anhaften würde.

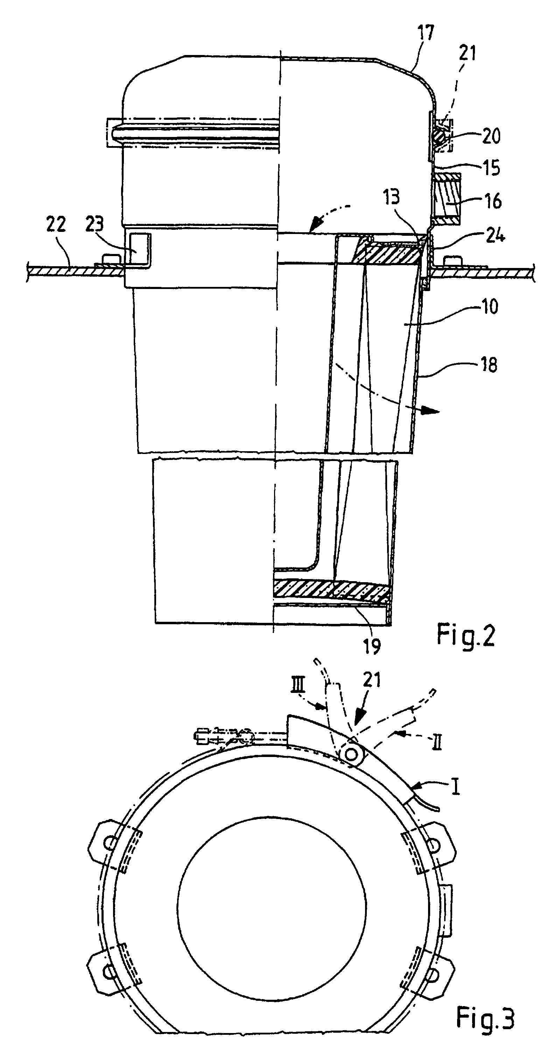

Figur 2 zeigt ein Filtergehäuse 15. Dieses weist einen Flüssigkeitszulauf 16 auf, einen Deckel 17, einen herausnehmbaren Stützkorb 18 sowie einen Stützboden 19. Das Filterelement 10 ist in dem Stützkorb 18 angeordnet und liegt auf dem Stützboden 19 auf. Die Dichtlippe 13 verhindert als Radialdichtung den Eintritt von Rohflüssigkeit in den außerhalb des Stützkorbs 18 befindlichen Reinflüssigkeitsbereich. Der Deckel 17 ist mit einem Dichtring 20 und einem Spannverschluß 21 versehen. Dieser Verschluß gewährleistet eine druckstabile Abdichtung des Filters.

Das gesamte Filter wird auf einen hier nur teilweise gezeigten Behälter 22 aufgesetzt und über die Laschen 23,24 an diesem Behälter befestigt. Durch die Wölbung der Dichtscheibe 11 wird der Flüssigkeitsdruck im Rohflüssigkeitsbereich abgefangen, in eine radiale Kraftkomponente umgelenkt und von dem Stützboden 19 und dem Stützkorb 18 kompensiert.

Figur 3 zeigt eine Draufsicht auf das Filtergehäuse mit dem Spannverschluß 21. In der gezeigten Stellung 1, der normalen Verschlußstellung, liegt der Spannverschluß an dem Deckel an. Zum Öffnen wird der Verschluß in die Stellung 2 bewegt. Dies ist die sogenannte Sicherheitsstellung, in welcher lediglich eine Druckentlastung im Behälter stattfindet. Sofern der Druck im Behälter noch nicht vollständig abgebaut ist, kann der Verschluß wieder in Stellung 1 bewegt werden. Ist der Behälterinnendruck abgebaut, dann kann der Verschluß entriegelt werden und in Stellung 3, d. h. die Offenstellung, bewegt werden. Hier läßt sich der Deckel vom Gehäuse entfernen, ein Austausch des Filterelements 10 ist möglich.

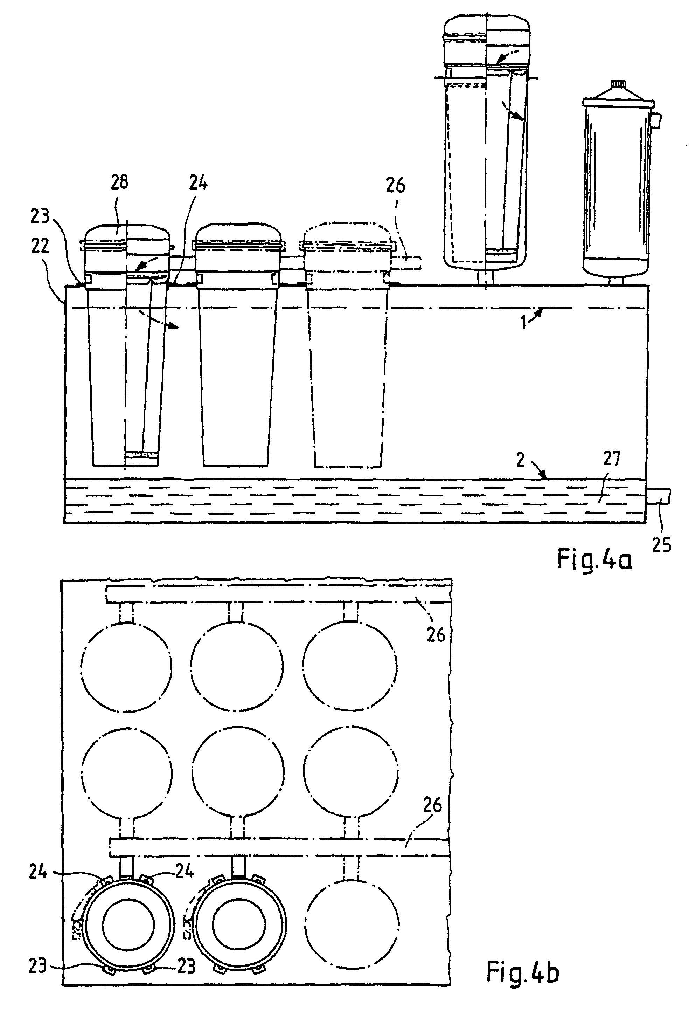

Figur 4 zeigt ein Filtersystem in Seitenansicht und Draufsicht. Mehrere Filter 28 sind in einem Behälter 22 angeordnet. In diesem Behälter 22 befindet sich die Reinflüssigkeit 27. Diese wird über eine Leitung 25 zu einem Verbraucher geleitet und gelangt über die Leitung 26 zurück. Diese Leitung verzweigt sich an die einzelnen Filter und führt die zu reinigende Flüssigkeit diesen Filtern zu.

## Patentansprüche

1. Filter für gasförmige und flüssige Medien, insbesondere für Kühl-, Schmier- und Bearbeitungsmedien bei Werkzeugmaschinen, bestehend aus einem zick-zack-förmig gefalteten, zylinderförmigen Filterelement, welches an den stirnseitigen Enden Dichtscheiben aus Polyurethan-Schaum aufweist, wobei eine Dichtscheibe (11) geschlossen ist und die weitere Dichtscheibe (12) zum Eintritt des zu filternden Mediums offen ist, wobei das Filterelement (10) konisch ausgebildet und in die stirnseitigen Dichtscheiben (11, 12) eingebettet ist und wenigstens eine Dichtscheibe (12) ein Radialdichtungselement (13) aufweist, **dadurch gekennzeichnet, daß** das Radialdichtungselement (13) Weich-Polyurethan-Kunststoff und die Dichtscheibe (12) Hart-Polyurethan-Kunststoff ist.

2. Filter nach Anspruch 1, **dadurch gekennzeichnet, daß** ein Vorfilter (31) auswechselbar und / oder auswaschbar eingesetzt werden kann und dieser aus Kunststoff besteht.

3. Filter nach Anspruch 2, **dadurch gekennzeichnet, daß** das Vorfilterelement (33) des Vorfilters (31) eine zylindrische oder konische Form aufweist und glatt oder zick-zack-förmig ausgeführt ist, wobei es axial über eine Dichtung (30) gegenüber dem Filterelement abgedichtet werden kann.

4. Filter nach Anspruch 2, **dadurch gekennzeichnet, daß** mit der Dichtscheibe (12) der Vorfilter (31) fest verbunden ist, welcher in Form einer Siebtasche ausgebildet ist und aus Kunststoff besteht.

5. Filter nach Anspruch 1, **dadurch gekennzeichnet, daß** ein Gehäuse (15) vorgesehen ist, welches einen entsprechend der Außenkontur des Filterelements geformten Lochblechmantel aufweist und oberhalb des Filterelements (10) ein verschließbarer Druckbehälter vorgesehen ist zur Aufnahme der Rohflüssigkeit.

6. Filter nach Anspruch 5, **dadurch gekennzeichnet, daß** der Druckbehälter einen Deckel (17) mit Sicherheitsverschluß (21) aufweist.

7. Filter nach Anspruch 6, **dadurch gekennzeichnet, daß** der Sicherheitsverschluß (21) mit zwei Öffnungsstellungen versehen ist, wobei in der ersten Stellung ein Druckabbau erfolgt und in der zweiten Stellung das Entfernen des Deckels (17) ermöglicht wird.

## Claims

1. Filter for gaseous and liquid media, more especially for coolants, lubricants and machining media for machine tools, said filter comprising a zigzag-folded, cylindrical filter element which has sealing discs formed from polyurethane foam on the end faces, one sealing disc (11) being closed, and the additional sealing disc (12) for the entry of the medium to be filtered being open, the filter element (10) being conical and being embedded in the end-face sealing discs (11, 12), and at least one sealing disc (12) having a radial sealing element (13), **characterised in that** the radial sealing element (13) is soft polyurethane plastics material, and the sealing disc (12) is hard polyurethane plastics material.

2. Filter according to claim 1, **characterised in that** a preliminary filter (31) can be used in an interchangeable manner and/or in a washable manner, and said preliminary filter is formed from plastics material.

3. Filter according to claim 2, **characterised in that** the preliminary filter element (33) of the preliminary filter (30) has a cylindrical or conical shape and is smooth or zigzag-shaped, said element being able to be sealed axially from the filter element by a seal (30).

4. Filter according to claim 2, **characterised in that** the preliminary filter (31), which is in the form of a sieve-like pocket assembly and is formed from plastics material, is securedly connected to the sealing disc (12).

5. Filter according to claim 1, **characterised in that** a housing (15) is provided, which has a perforated sheet metal casing shaped to correspond to the external configuration of the filter element, and a closable pressure container is provided above the filter element (10) for the accommodation of the unfiltered fluid.

6. Filter according to claim 5, **characterised in that** the pressure container has a cover (17) provided with a safety closure (21).

7. Filter according to claim 6, **characterised in that** the safety closure (21) is provided with two opening positions, a pressure reduction occurring in the first position, and the removal of the cover (17) being rendered possible in the second position.

## Revendications

1. Filtre pour des fluides gazeux ou liquides, notamment des fluides de refroidissement, de lubrification et d'usinage de machines-outils, comprenant un élément de filtre de forme cylindrique plié en zigzag, et muni au niveau de ses extrémités frontales, de disques d'étanchéité en mousse de polyuréthane, l'un des disques d'étanchéité (11) étant fermé et l'autre disque d'étanchéité (12) étant ouvert pour l'entrée du fluide à filtrer,
l'élément de filtre (10) ayant une forme conique et étant logé dans les disques d'étanchéité (11, 12) des faces frontales, dont au moins un disque d'étanchéité (12) comporte un élément d'étanchéité radial (13),
**caractérisé en ce que**
l'élément d'étanchéité radial (13) est en polyuréthane souple et le disque d'étanchéité (12) en polyuréthane dur.

2. Filtre selon la revendication 1,
**caractérisé par**
un pré-filtre (31) interchangeable et/ou lavable, et ce pré-filtre est en matière plastique.

3. Filtre selon la revendication 2,
**caractérisé en ce que**
l'élément (33) du pré-filtre (31) a une forme cylindrique ou conique et une réalisation lisse ou en zigzag, et cet élément est séparé de manière étanche de l'élément de filtre par un joint (30).

4. Filtre selon la revendication 2,
**caractérisé en ce que**
le pré-filtre (31) est relié solidairement au disque d'étanchéité (12), ce pré-filtre ayant la forme d'une poche de tamis et étant en matière plastique.

5. Filtre selon la revendication 1,
**caractérisé par**
un boîtier (15) ayant une enveloppe en tôle perforée dont la forme correspond au contour extérieur de l'élément de filtre, avec au-dessus de l'élément de filtre (10) un réservoir de pression qui peut être fermé et prévu pour recevoir le liquide non filtré.

6. Filtre selon la revendication 5,
**caractérisé en ce que**
le réservoir de pression comporte un couvercle (17) avec une fermeture de sécurité (21).

7. Filtre selon la revendication 6,
**caractérisé en ce que**
la fermeture de sécurité (21) comporte deux positions d'ouverture, dans l'une des positions d'ouverture il y a diminution de la pression et dans l'autre position on peut enlever le couvercle (17).
